# EUROPEAN PATENT SPECIFICATION

(11) **EP 1 879 025 B1**
(45) Date of publication and mention of the grant of the patent: **09.10.2013**
(21) Application number: 06014275.9
(22) Date of filing: 10.07.2006
(51) Int. Cl.: B01D 71/02, B01D 67/00, G01N 30/00

(54) **Regenerable membrane unit for flow field-flow fractionation and channel module containing the same**
Regenerierbare Membraneinheit für Fluss Feld-Flussfraktionierung und diese enthaltendes Kanalmodul
Membrane régénérable pour le fractionnement par couplage flux-champ et canal comprenant cette membrane

(43) Date of publication of application: 16.01.2008
(73) Proprietor: Postnova Analytics GmbH, 86899 Landsberg (DE)
(72) Inventor: Klein, Thorsten, Dr., 86938 Schondorf (DE); Welz, Roland, 86956 Schongau (DE)
(74) Representative: HOFFMANN EITLE

(56) References cited:
- WO-A-99/44726
- US-A- 4 147 621
- US-A1- 2005 148 064
- US-B1- 6 365 050
- DATABASE BIOSIS [Online] BIOSCIENCES INFORMATION SERVICE, PHILADELPHIA, PA, US; 1993, LITZEN ANNE ET AL: "Separation and quantitation of monoclonal antibody aggregates by asymmetrical flow field-flow fractionation and comparison to gel permeation chromatography" XP002404088 Database accession no. PREV199396099703 & ANALYTICAL BIOCHEMISTRY, vol. 212, no. 2, 1993, pages 469-480, ISSN: 0003-2697
- JUHANI KRONHOLM, PERTTI VASTAMÄKI, RIIKKA RÄSÄNEN, ANNUKKA AHONEN, KARI HARTONEN, MARJA-LIISA RIEKKOLA: "Thermal Field-Flow Fractionation and Gas Chromatography-Mass Spectrometry in Determination of Decomposition Products of Expandable Polystyrene after Reactions in Pressurized Hot Water and Supercritical Water" INDUSTRIAL AND ENGINEERING CHEMISTRY REASEARCH, vol. 45, no. 9, 29 March 2006 (2006-03-29), pages 3029-3035, XP002404086
- XU H -F ET AL: "Recycling and regeneration of used perfluorosulfonic membranes for polymer electrolyte fuel cells" JOURNAL OF APPLIED ELECTROCHEMISTRY KLUWER ACADEMIC PUBLISHERS NETHERLANDS, vol. 32, no. 12, December 2002 (2002-12), pages 1337-1340, XP002404109 ISSN: 0021-891X

## Description

### FIELD OF THE INVENTION

The present invention relates to a membrane unit for a flow field-flow fractionation apparatus, and, more particularly, to a membrane unit for a flow field-flow fractionation apparatus comprising a regenerable membrane.

The present invention further relates to a channel module comprising such a membrane unit; a field-flow fractionation unit comprising such a channel module; an analytical apparatus containing such a field-flow fractionation unit and a GPC unit; and the use of a heat-resistant membrane in a channel for field-flow fractionation. The channel module may be used in field-flow fractionation (FFF) and preferably in the flow field-flow fractionation (flow FFF) for the separation (purification) and concentration of particle-containing liquid samples.

The invention is especially suitable for use in symmetric and asymmetric flow FFF, which are both sub-techniques of the FFF group of separation techniques.

### BACKGROUND OF THE INVENTION

Field-flow fractionation is a group of chromatography-like separation techniques for the separation of particles in liquids. The principle of FFF is outlined in detail below.

In FFF, the particle sample is transported into and through a separation channel by means of a suitable liquid carrier. The separation of the different particle samples is achieved by an external separation field, which is applied perpendicular to the main flow direction of the channel. Particles in this context mean any sort of molecules, especially macromolecules such as proteins, polymers, biopolymers, but also colloids and small molecules without size limitation.

The differently sized particle fractions are eluted from the FFF channel at different times (retention times) after the initial injection, and are transferred directly into one or more on-line detection systems for quantitation and qualification of the samples.

In principle, all FFF sub-techniques use the same basic separation channel principle. However, the construction of the channel may vary, as different external separation fields are used in the various FFF sub-techniques. When an electrical field gradient, a temperature gradient, a flow field or a centrifugal field is applied, the FFF sub-technique is called electrical FFF, thermal FFF, symmetric or asymmetric flow FFF or centrifugal/sedimentation FFF.

Irrespective of the sub-technique used, the FFF channel has to meet certain requirements. Most commonly the channel is constructed as a module (hereinafter referred to as "channel module"), where the actual channel cavity used for the separation is located inside this module. In FFF channels used for flow FFF, these cavities typically have a length of about 20-30cm, a width of about 2-3 cm and a thickness of about 70-500 µm. In principle other cavities of smaller and larger dimensions can be also used.

The channel cavity thickness in FFF is selected to be sufficiently small so that a laminar flow profile is present inside the channel. Together with the externally applied separation field, this laminar flow profile is necessary for successful FFF separations. At the currently given temperature and solvent viscosity ranges used in FFF, the thickness can only be expanded to about 1000 µm since above this limit a laminar flow profile can no longer be established. A channel thickness smaller than 50-70 µm is limited by technical and material restrictions since the channel cavity has to be very flat and homogenous throughout its entire length. This cannot be achieved below 50-70 µm any longer to a sufficient extent by currently available materials and manufacturing conditions.

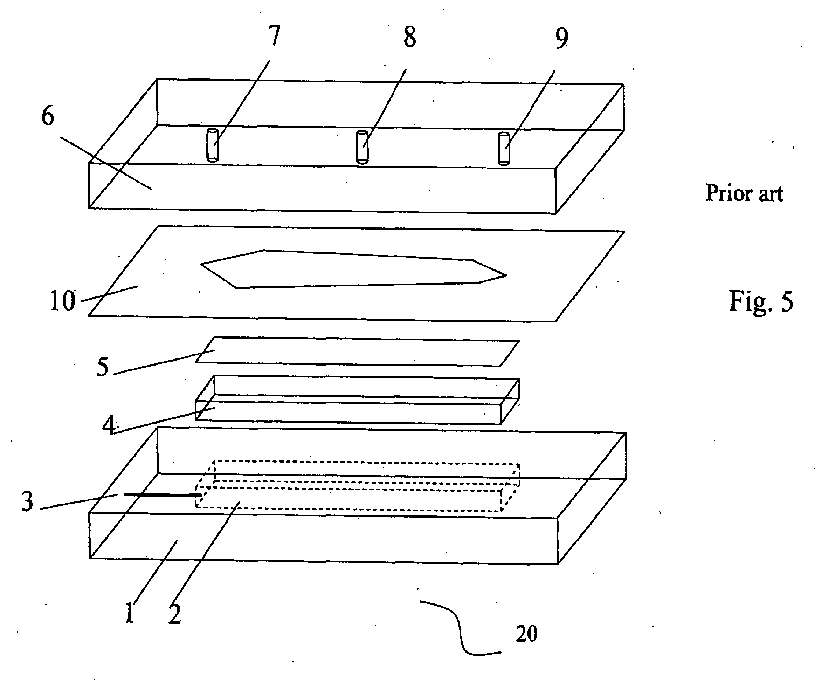

The actual separation in a FFF channel module takes place inside this channel cavity. In principle, the construction of such a FFF channel module can be carried out in various ways. This depends very much on the FFF sub-technique for which the channel module is used. One possibility for such a channel module is described hereinafter with respect to Fig. 5.

As can be seen in Fig. 5, in general, a channel module 20 comprises an upper plate (top part) 6, a lower plate (bottom part) 1, a membrane 5, a support 4 and a spacer 10. The upper plate 6 is provided with inlet ports 7, 8, 9 for the main channel flow, focus flow, and cross flow, respectively, and the lower plate 1 is provided with an outlet port 3 for the cross flow. The nature of the spacer 10 determines the length, width and thickness of a channel cavity 2 which is provided in the lower plate 1. The spacer 10 can be made from flat sheets of different materials, e.g. Mylar (polyester), inside which the inner channel cavity 11 is formed.

An FFF channel system suitable for use in routine and industry applications, outside of university research - level laboratories, has already been described in DE 198 08 992 A. An asymmetric flow FFF device is known from the publication entitled "Separation and Quantitation of Monoclonal Antibody Aggregates by Asymmetrical Flow Field-Flow Fractionation and Comparison to Gel Permeation Chromatography", by A. Litzén et al., Analytical Biochemistry 212, 469-480 (1993). The device comprises a channel assembly with a porous frit (filter for smallest particles), a membrane, a spacer, and an upper wall. A flow field-flow fractionation system including a typical separation channel which comprises (from bottom to top) an outlet frit, a sheet like disposable filtration membrane, a channel spacer and an inlet frit within a channel housing is disclosed in US 6,365,050. Another flow field-flow fractionation apparatus is disclosed in US 4,147,621. The separation channel used in this apparatus basically corresponds to the separation channel of the flow field-flow fractionation system disclosed in US 6,365,050. However, in the separation channel of US 4,147,621 no sheet like disposable filtration membranes as described in US 6,365,050 are applied. Suitable paper based or other sheet like disposable filtration membranes were not available at that time and the filtration membranes used in the flow field-flow fractionation apparatus disclosed in US 4,147,621 were instead freshly prepared on the porous polypropylene plates forming the lower and the upper channel wall. However, it is not suggested in any of these references that the membrane can or should be regenerable.

US 2005/0148064 discloses a microfluidic device and a method for fractionating and/or trapping selected molecules with a diffusion barrier or a porous membrane. The dimensions of the microfluidic device are such that it may, for example, be integrated as a structure for a "lab-on-a-chip" (cf. paragraph [0035] of US 2005/0148064). An article of J. Kronholm et al., Industrial and Engineering Chemistry Research 45, 3029-3035 (2006), discloses the use of thermal field-flow fractionation and gas chromatography-mass spectrometry in the determination of decomposition products of expandable polystyrene after reactions in pressurized hot water and supercritical water. However, in thermal field-flow fractionation separation channels, no filtration membranes are used.

All flow FFF sub-techniques use a semi-permeable membrane as principle part of their channel configuration. Typically this membrane has a pore size in the range of ca. 1 nm to 500 nm, depending on the targeted application. To ensure a sufficient flow rate, a thin membrane with a thickness of about 10-500 µm is used. In most cases this thin membrane is supported by a highly porous non-compressible frit, to provide sufficient mechanical stability and to avoid cracking of the membrane under pressure. The frit has pores which are significantly larger than the separation membrane to avoid any backpressure and to let the solvent pass without additional resistance. Basically, the frit functions as a stable mechanical support for the thin membrane. The frit and the membrane are two independent, separately existing and not permanently connected parts of the system. The membrane, as the main consumable part in FFF, has to be exchanged frequently. The separation performance of a given FFF system is mainly dependent on the nature and performance of the used membrane and, thus, the membrane is the main limiting component.

In all prior art FFF systems, the membrane is the most frequently exchanged consumable part of the FFF channel. In some cases the membrane has to be exchanged after each measurement or after only a few measurements. Despite the fact that the new type of FFF system described in DE 198 08 992 A already shows much better measurement reproducibility after membrane replacement, some inherent problems can still not be avoided when replacing the membrane. The following problems are typically observed when using a prior art FFF system in practice:
1) The membrane is a consumable part (spare part) which needs to be replaced on a frequent basis and cannot be recycled.
2) Exchanging the membrane is still a time consuming step, which needs some know-how to minimize errors and maximize reproducibility.
3) The membrane has to be frequently replaced, causing significant costs due to the needed manpower and membrane material.
4) The reproducibility of the same type of membrane material (porosity, surface charge, etc.) is currently not sufficient. This is the case for the batch-to-batch reproducibility as well as the constant properties across one membrane sheet (batch).
   This causes the following reproducibility problems when replacing the membrane:
   a) absolute retention times vary, also when all other parameters are kept constant;
   b) separation performance changes for the same sample under the same separation conditions;
   c) membranes are differently compressible causing different channel heights and, thus, different channel volumes, which influences a) and b) additionally; and
   d) the recovery rate of the analyte can vary even within one batch of membranes.
5) The complete FFF system has to be cleaned, equilibrated and completely re-calibrated after each membrane exchange.
6) The mechanical and chemical stability of the currently used membranes as well as their surface properties, such as surface charge, are insufficient. This is why only a small percentage of the overall possible applications are accessible by the currently available FFF devices. Especially impossible are the following applications of such devices:
   a) Sets of measurements where different samples which vary only slightly in molar mass and/or size and/or concentration have to be measured over a longer time period using the same membrane;
   b) Applications which require strong organic and/or halogenated organic solvents. The currently available membranes only allow the use of standard organic solvents, such as THF, EtOH, MeOH, and acetone.
   c) Applications which require aggressive aqueous solvents and/or solvents with high and low pH-values. Current membranes can only be used in a limited pH range and are not resistant to aggressive solvents.
   d) Applications which require special membrane surface properties, such as a special surface charge, which is required for example for the separation of amphoteric anionic/cationic polymers and nanoparticles. These analytes tend to adsorb irreversibly to the currently used membranes, prohibiting any separation.
   e) Applications at elevated temperatures with or without strong organic or halide-containing solvent systems. For example, the separation of the wide range of polyolefines at temperatures in the range of 150-210°C in halide-containing solvents is currently not possible.

### SUMMARY OF THE INVENTION

One object of the present invention is to improve flow field-flow fractionation (flow FFF), in the direction of better and easier handling, decreased running costs, and to access new, additional fields of application.

A further object of the present invention is to significantly increase the separation performance and reproducibility of the measurement results.

To solve the above objects, the present invention provides in one of its various aspects a membrane unit for a field-flow fractionation apparatus according to claim 1, a channel module for a field-flow fractionation apparatus according to claim 4, a field-flow fractionation unit according to claim 5, as well as the use of a regenerable membrane in a channel module for field-flow fractionation according to claim 6. Optional and preferred features are defined in the dependent claims.

The inventive solution is based on the idea that the membrane does not need to be a spare or expandable part as in prior art devices. According to one particular aspect of the present invention, there is provided a membrane unit for a flow field-flow fractionation apparatus comprising a regenerable membrane. By "regenerable" it is understood that the membrane can be regenerated (cleaned) after its performance has dropped to unacceptable levels, and can then be used again with essentially the same performance as the original membrane. In a preferred embodiment, this regeneration process is repeatable at least 10 times, more preferably 100 times or more, and most preferably 1000 times or more.

In a further aspect of the present invention, a heat-resistant membrane is used, which may or may not be, but preferably is regenerable. In the context of this application, the term "heat-resistant" means resistant at temperatures of at least 90°C, preferably between 150 and 200°C.

The membrane unit according to both embodiments of the present invention may consist only of the membrane, but preferably the membrane unit further comprises a porous support. In a preferred embodiment, the membrane and the porous support together form an integral "monolithic" membrane unit. In another embodiment the membrane unit consists of the support and at least one membrane. The porosity of the membrane and the porous support, respectively, may be the same or different. The support is preferably a frit. If the support and the membrane form one integral membrane unit, no separate insertion of a membrane into a channel module is necessary during assembly.

Preferably, the support and the membrane, which together form the membrane unit, are made of at least one material which is chemically inert with respect to the solvents and samples used for the measurement. More preferably, the material(s) have a temperature resistance and mechanical stability sufficient for use in field-flow fractionation at temperatures of 90°C or higher.

The membrane and membrane support according to the present invention can be cleaned in-between the measurements and, thus, can be used repeatedly. The membrane unit of the preferred monolithic embodiment of the present invention can be placed directly into a channel module, and together with the module into any existing flow FFF system as an integrally formed "monolithic" unit. A complicated assembly of the membrane and the support into the channel module, which is typical for currently used FFF systems and "conventional" channel modules where the membranes have to be exchanged frequently, is no longer necessary. Furthermore, the monolithic design reduces the risk of alterations of the FFF measurement results and also the generation of wrong and artefact-containing measurements, which can be caused by the insufficient reproducibility of the currently used membrane units. The selection of special, well-suited materials for the membrane and the membrane support provides the required inert properties during the separation process on the one hand and at the same time the easy and reversible cleaning possibilities on the other hand.

Preferred materials for the support and the membrane are selected from the group consisting of inorganic materials, polymeric materials, metallic materials or glass-based materials, or any combination thereof. Most preferably, the inorganic material is selected from the group consisting of metallic oxides, in particular aluminum oxide, and metallic silicates, in particular aluminum silicate. The polymeric material preferably comprises a fluoropolymer, in particular a thermoplastic fluoropolymer, most preferably a polytetrafluoroethylene (PTFE, sold under Teflon®) or a mixture of PTFE and another suitable polymer such as polyethersulfone (PES). Suitable metallic materials include stainless steel and titanium.

The effective pore size of the membrane support is typically between 1µm und 100µm. Due to this, the membrane support can be produced by using particle sizes which are typical standard sizes of these materials, used for the production of the support. This simplifies the production on the one hand and allows a sufficiently high flow rate across the membrane support, avoiding additional back pressures. As an alternative to the use of sintered porous materials, the use of specially woven ultra-thin stainless steel webs with pore sizes in the µm-range is also possible.

A possible further embodiment of the present invention is the use of additional membrane layers between the support and the membrane itself, wherein all layers are fixed to each other. This design would be especially well suited if the device is intended to be used not only in FFF but also for other applications, e.g. as membrane testing apparatus, for the investigation of the basic processes which occur during a filtration experiment and for testing the surface chemistry of specially developed substances. For these kinds of experiments membranes having several layers and an anisotropic design are often required.

Another aspect of the present invention is a channel module for a field-flow fractionation apparatus with a separation membrane. The membrane, which is regenerable and/or heat-resistant, may be permanently fixed to the membrane support. This monolithic part is completely made of inert inorganic, metallic or inert polymeric materials, which can be regenerated and cleaned after use. This embodiment is particularly suitable to achieve the objectives mentioned above. By using completely inert materials for the membrane, it is possible to avoid a complete disassembly of the channel for membrane replacement between the measurement sequences, which is necessary in conventional field-flow fractionation units. This saves costs during the operation of the system (work time and membrane material), facilitates the use of the system and opens up a new range of applications, such as high-temperature FFF applications, which could not be accomplished by FFF before.

Regeneration of the membrane after use has proven to be superior over frequent exchanges of the membranes. Regeneration in this context means the cleaning process of the membrane surface and pores to remove all or at least substantially all impurities. The regeneration has to be conducted in such a way that the membrane after regeneration shows the same physical properties, such as surface charge, pore-size distribution, etc. as a new completely unused membrane. The cleaning process is achieved by pumping a special solution through the channel, without disassembly. Depending on the nature and the amount of the impurities sticking to the membrane, different chemicals at room temperature or at an elevated temperature can be used. Possible cleaning agents for polar hydrophilic impurities can be strongly alkaline solutions containing NaOH, KOH and additional detergents, such as sodium dodecylsulfate (SDS), or strong acidic solutions. For removal of non-polar hydrophobic impurities, strong organic solvents, such as THF, can be employed. In practice a controlled process of rinsing the channel sequentially with all three of these cleaning agents (acidic, alkaline and organic solvents) has been most successful. To overcome the incompatibility (non-miscibility) of the organic solvent with the aqueous solvents, rinsing with a washing solvent (ethanol, or methanol) in-between the single cleaning steps may be appropriate.

The effective pore size of a membrane ideally suited for the channel module described in this invention ranges from 1 nm to about 500 nm. This is also the typical pore size range of the replaceable membranes used for conventional channel modules. However, the membranes of the channel modules according to this aspect of the present invention have the advantage that they can be cleaned and regenerated. The actually used pore size depends greatly on the desired application and the used FFF instrument. The typical pore size used in Flow FFF, for example, is in the range between 1 and 10 nm.

The new types of FFF membranes described in this invention can be additionally modified by chemical derivatization since they consist of inert porous materials which can be regenerated.

This is another preferred option of the present invention, and opens up new fields of application for FFF.

The regenerable membrane as used in the present invention is preferably chemically inert, semi-permeable and heat-resistant.

One preferred process for the preparation of a membrane unit according to the present invention starts with providing a porous support material. Preferred support materials are stainless steel and inorganic ceramic materials, particularly such based on alumina and/or silica. The porous support material can be cut directly from a piece of a suitable raw material (starting material), or it can be built up stepwise by adding different porous layers one on top of each other. After that a wet, inert and porous material can be cast on top of this support material to form the membrane. This is followed by the reversible drying/sintering of the wet material in such a way that it is directly and permanently connected with the support material. This manufacturing process is advantageous since the separation membrane can be directly generated on the support material. The membrane is strongly bonded and permanently connected to the support material. Additionally, this production technology has the advantage that very thin membranes can be produced, which are mechanically still very stable since they are bonded with a strong support material.

The wet membrane material can be transferred to the surface of the support material by deposition, ideally by using liquid deposition, by a spinning process or by vapour deposition. These techniques provide a very homogenous thickness of the wet material on the surface. This is essential to achieve a membrane having the same properties along its entire surface. The preferred material used in such a membrane formation process is an inorganic ceramic material, particularly a ceramic based on alumina and/or silica.

Sequential casting of different layers, step by step on the surface, is another preferred option for producing the membrane. The pore size in these layers decreases gradually from the first to the last layer, whereas the last layer (top layer) finally has the pore size needed for the separation. This process has the advantage that the porosity and the pore size distribution of the separation membrane can be controlled and customized much better than in other processes. In this anisotropic membrane only the very last layer has the smallest pore size. This allows much higher flow rates and fewer back pressures, which supports the use of these types of membranes for FFF applications.

It is possible to cast the different layers on top of each other and to dry the complete membrane at the end of this process. But it has been found that the requested final pore size can be produced more precisely when each layer is cast and dried independently, before the next layer is placed on top.

When metallic or inorganic materials are used, the process of sintering or oven drying is the best way to ensure the most durable and strong bonding between the layers of the membrane and the support material.

According to this aspect, the present invention allows that the membrane unit with the regenerable membrane can be used repeatedly for field-flow fractionation, and also at high temperatures if the membrane unit is heat-resistant. Using this process, the membrane can be completely chemically regenerated at high temperatures in-between two FFF runs or in-between two sequences of runs. The membrane is no longer a consumable part which needs to be replaced on a frequent basis, but is a fixed part of the membrane module which can be regenerated when necessary. The process of regeneration by heating or by cleaning with special chemicals removes adsorbed impurities from the membrane and reinstates the original surface conditions of the membrane, which have been defined by the selection of the membrane material and/or chemical modification of the membrane surface.

In accordance with this aspect, the present invention provides a channel module for a field-flow fractionation apparatus comprising the above membrane unit. Preferably, the membrane of the membrane unit forms one accessible side of the channel module. The arrangement of the porous membrane at an accessible side simplifies access to the membrane. Accordingly, the design of the interfaces to the field flow fractionation unit becomes easier and the cleaning is simplified.

According to a further aspect, the present invention provides a field-flow fractionation unit which comprises the above channel module. This field-flow fractionation unit can be used as a stand-alone apparatus to separate molecules in a particle-containing liquid sample.

The present invention may provide a field-flow fractionation method using the above-described channel module. This method is carried out at temperatures of 90°C or higher. Preferably, the method is carried out at temperatures between approximately 150 and 200°C. It is particularly preferred that this method is a flow field-flow fractionation (flow FFF) method.

In accordance with still another aspect, the present invention provides the use of a channel module comprising a membrane unit with a regenerable membrane for field-flow fractionation. Preferably, the field-flow fractionation is carried out at temperatures of 90°C or higher.

### BRIEF DESCRIPTION OF THE DRAWINGS

Further features and advantages of the present invention will become apparent from the following detailed description of the invention, taken in combination with the appended drawings, in which:
- Fig. 1: shows a schematic view of a preferred embodiment of a membrane unit in accordance with the present invention;
- Fig. 2: shows a schematic view of a field-flow fractionation device in accordance with the present invention;
- Fig. 3: shows a schematic view of a complete analysis instrument in accordance with the present invention;
- Fig. 4: shows a view of an example of the basic construction of an FFF channel module comprising the membrane unit in accordance with the present invention;
- Fig. 5: shows a view of a prior art FFF channel module.

### DESCRIPTION OF PREFERRED EMBODIMENTS

Same or similar elements are given the same reference signs throughout the following description.

The invention provides an easy-to-use device for field-flow fractionation. Preferred is the use of the FFF system together with a flow measurement and control device (not shown).

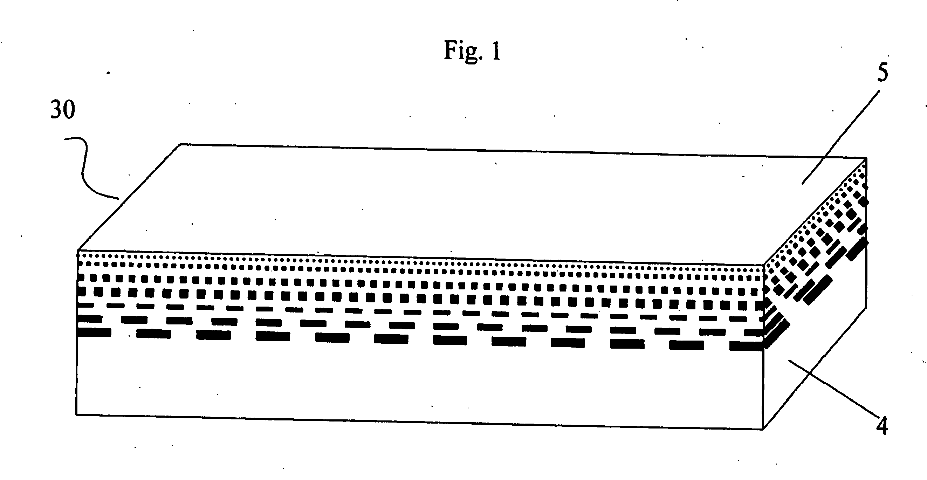

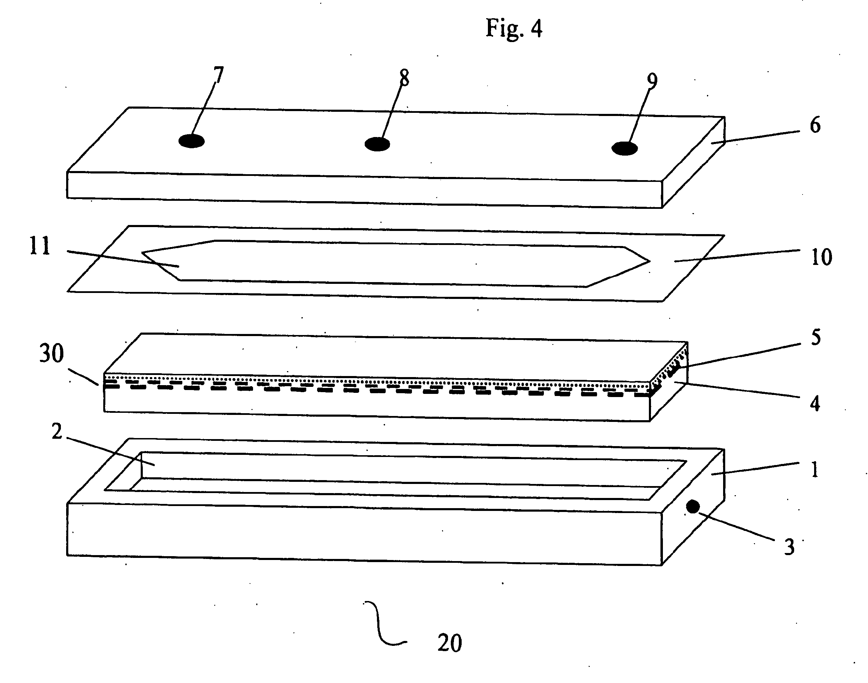

In conventional FFF systems, the membrane unit is constructed from different single parts 4, 5, as shown in Fig. 5. In contrast, in accordance with one preferred aspect of the invention, the membrane unit is formed integrally (Figs. 1 and 4). The membrane unit of this invention can be used together with the channel module which is described in DE 198 08 992 A.

Fig. 4 shows an FFF channel module 20 which comprises a massive support 4 on which a semi-permeable membrane 5 is positioned. The membrane 5 and the support 4, such as a frit, are preferably provided as an integrally formed part and constitute a membrane unit 30 (shown in detail in Fig. 1). On top of the membrane 5 a thin slide 10, the so-called spacer, is located. The thin slide 10 has a cavity 11 inside, which constitutes the actual separation channel. The separation channel 11 height is determined by the thickness of this spacer 10. In a preferred embodiment, the separation channel 11 has a trapezoidal shape with apexes at inlet and outlet ports 7, 9 provided in a top part 6 of the channel module 20. In particular, the top of the channel module 20 is a first flat plate (top part) 6, in which the inlet port 7, an injection port 8 and the outlet port 9 are located. The channel module 20 further comprises a second flat plate 1 as a bottom part. The bottom part 1 has a cavity 2 formed on one side of the plate 1, into which the membrane unit 30 is to be placed. In addition, an outlet port 3 which is in fluid communication with the cavity 2 is provided in the lower plate 1. The channel top and bottom 1, 6 may be made of glass, plastic, stainless steel, and the spacer 10 may be made of a mechanically and chemically stable, but still flexible plastic material.

The membrane unit 30 is preferably made as one piece, which greatly simplifies the assembly of the complete FFF device. However, the high-temperature resistant membrane 5 and the support 4 may also be provided as separate parts. The massive support 4 and the membrane 5 are made of a porous material. The porosity of the support 4 and the membrane 5 differ significantly. The support 4 preferably has an effective pore size in the range of 1-100 µm, but in most cases 10-20 µm is used. The preferred thickness of the support 4 ranges from ca. 100 µm to 1 cm.

The average pore size (porosity) of the membrane 5 is preferably from 1 to 500 nm. In most cases a porosity of 1 to 10 nm and a thickness of some 100 µm are used.

In an ideal case, the boundary layers of the support 4 and membrane 5 are fully co-planar to each other. However, the design could also be changed so that the two components are no longer located co-planar to each other. Also, it is preferred that the membrane 5 and support 4 have the same surface dimensions. This has the advantage that they can be made from a single piece as well.

The currently preferred combination of materials uses stainless steel for the support 4 and a mix of stainless steel and inorganic materials (mix of Al₂O₃, SiO₂, TiO₂ and ZrO₂) for the membrane 5. Depending on the intended use, these materials can be changed to better suited combinations. However, to ensure the required inert and heat-resistant properties of the channel module 30, it is advisable to use only raw materials based on inorganic and/or metallic and/or Teflon® and/or glass materials.

In addition to the uses already described hereinbefore, the membrane 5 can also be used for several other applications, when a chemical surface modification is carried out by derivatization. One example is the separation of amphiphilic and cationic polymers und particles, which irreversibly adsorb onto conventional membranes with negative surface charge. For this application, the channel module 20 has to be chemically treated in such a way that the complete surface of the membrane 5 is modified from negative to positive charges. These positive surface charges of the membrane 5 prevent the positively charged analytes from adsorbing.

Based on this description, the best suitable steps for producing such a field-flow fractionation membrane unit 30 can be devised as follows:

The starting material can be Al₂O₃ or a stainless steel frit with a suitable porosity. This material would act as support 4 and can have a thickness starting from about 100 µm to 10 millimetres, preferably 200µm to 3 mm.

The membrane 5 can be coated on said support 4 by e.g. applying a suspension of an organic binder (e.g. a dispersion of polyacrylate or another suitable polymer) and inorganic particles, e.g. SiO₂ particles, by using, for example, a vibration coating device or a spray head. The particle size has to be selected depending on the porosity of the membrane 5 to be produced. The thickness of such a membrane layer is typically between 10 to 400 µm, preferably 10 to 100 µm.

After coating, the inorganic particles and the support material 4 are bonded together by the organic binder. This binder is then evaporated and decomposed using high temperatures in an oven. By this process the inorganic material (e.g. SiO₂) is sintered, and the membrane 5 and the support 4 are irreversibly bonded together.

The temperatures in the oven should be selected in such a way that the sintering process is just beginning to start. It should be ensured that the sintering temperature is not too high, and that the temperature is not applied too long, so that a sufficient porosity is still maintained. On the other hand, the temperature should be selected high enough and should be applied long enough to ensure a sufficiently durable connection between the layers. Depending on the materials used, the temperature can be in the range of 800 to 1200°C. Other temperatures can also be used if the above-mentioned requirements are fulfilled.

These conditions presuppose that the process is carried out at atmospheric pressure. Using other pressures might enable the use of different temperatures as well.

After this, the next layer of inorganic particles with smaller particles size is cast onto the material, using the same procedure as given above. This process is repeated several times with particles of decreasing size, thus leading to different layers with increasingly smaller porosity. Using this process, it is possible to create a final layer of material with a very precisely defined porosity. In Figure 1, a membrane unit 30 is shown, wherein the membrane 5 has a gradually decreasing pore size from the support 4 towards the topmost layer of the membrane 5.

If the membrane 5 consists of a polymer material such as PTFE that cannot be easily coated onto the support, other suitable techniques such as sputtering or electrode deposition can be used.

A field-flow fractionation membrane unit, produced by the above-described process, can be easily cleaned, for example by chemical regeneration with alkalic or acidic solutions containing detergents and/or with strong organic solvents such as THF.

This field-flow fractionation membrane unit can be used in a new process for repeated FFF measurements, wherein the membrane 5 can be chemically regenerated between successive FFF measurements.

A preferred configuration of a field-flow fractionation unit for use at high temperatures (HTFFF) will be outlined below. In the context of the present invention, by high temperatures 90°C or more, and preferably 150°C or more, are meant.

The basic set-up is similar to the construction of typical asymmetric field flow fractionation units such as, for instance, described by K.-G. Wahlund et al., "Application of an Asymmetrical Flow Field-Flow Fractionation Channel to the Separation and Characterization of Proteins, Plasmids, Plasmid Fragments, Polysaccharides and Unicellular Algae", Journal of Chromatography 461 (1989) 73-87. These conventional units, however, are not suitable for use at high temperatures. In order to be able to use the asymmetric field flow fractionation technology at high temperatures, several technical changes have to be performed on such units. The high temperature FFF channel module 20, comprising the high-temperature resistant membrane 5, is the key part of an FFF unit which may be used at high temperatures, and is one aspect of the invention.

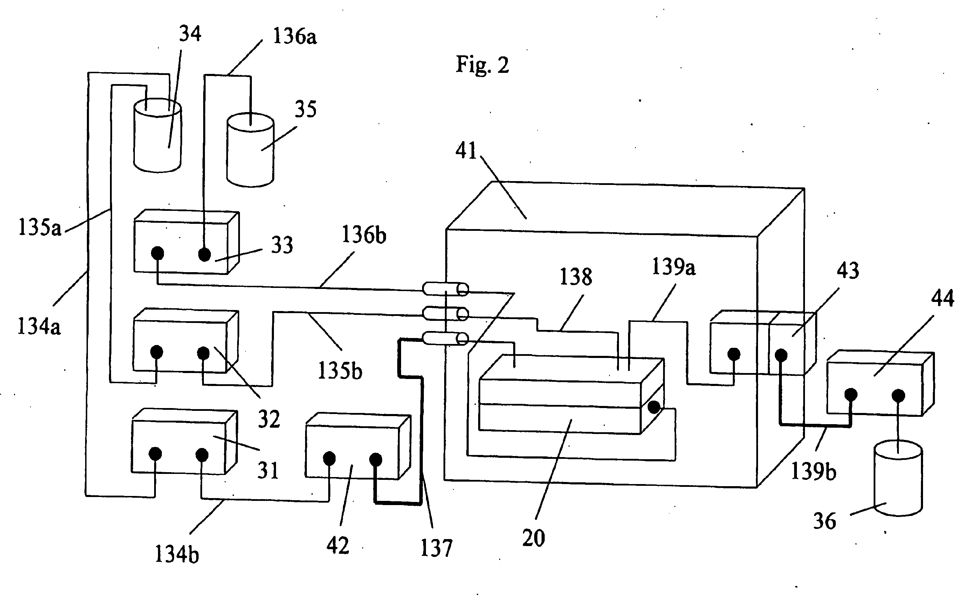

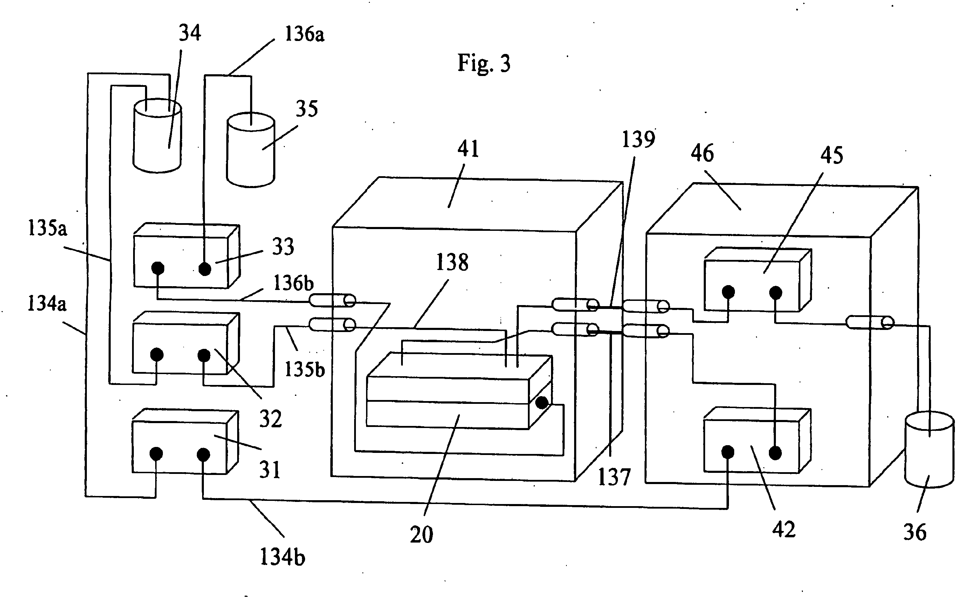

To withstand high temperatures, the channel module 20 is, for instance, made of stainless steel and ceramics. The top and bottom walls 6, 1 are constructed as shown in Fig. 4. The top wall 6 is made of high-grade stainless steel which withstands not only high temperatures but also aggressive chemical solvents, such as TCB (trichlorobenzene). The top part 6 is provided with the inlet port 7 for the main channel flow, the inlet port 8 for the focus flow, and the outlet port 9 for the separated sample exiting to detector units 43, 44 (Fig. 2) or 45 (Fig. 3), respectively. The bottom wall 1 is also made of high-grade stainless steel material, and is provided with the cavity 2 comprising the outlet port 3, where the cross flow can exit the channel module 20. The cavity 2 is made as a compartment where the support 4, such as a porous frit, is positioned. The porous frit 4 is made of ceramics, or more preferably, high-grade stainless steel. It is important that the thermal expansion coefficients of the top and bottom walls 6, 1 of the channel module 20, the frit 4 and all other parts of the channel module 20 are the same or at least very similar. This avoids damage and material tensions inside the channel at higher temperatures, when the materials are expanding.

The high temperature resistant FFF membrane 5 is positioned on top of the stainless steel frit 4. To ensure the same or at least similar thermal expansion, the FFF membrane 5 may be made of a very thin porous stainless support (not shown) onto which a ceramic membrane is cast. The thickness of the support can be about 50 to 250 µm. The thin stainless steel support prevents breaking of the ceramic membrane 5, so as to be sufficiently stable at high temperature conditions. Alternatively, the ceramic membrane 5 can also be directly cast onto the upper surface of the porous stainless steel frit 4, which is located in the compartment 2 of the bottom wall 1 of the channel module 20.

The ceramic membrane 5 used determines the cut-off and has a pore size of typically 1 to 10 nm or a cut-off of typically 1 to 100 kDa. The ceramic membrane 5 cast on the porous stainless steel support is normally very thin with a typical thickness of 50 to 150 µm. In total, the thickness of the ceramic membrane 5, including the thin stainless steel support, is preferably between approximately 100 to 400 µm. Depending on which cut-off is required, the ceramic membrane 5 can be symmetric or asymmetric. Symmetric means that the pore size dimensions are homogeneous throughout the ceramic layer and asymmetric means that the pore sizes decrease from the bottom to the top of the ceramic layer.

The high-temperature resistant spacer 10 is placed between the bottom 1 of the channel module 20, including the porous stainless steel frit 4 covered by the ceramic membrane 5, and the top 6 of the channel module 20.

The spacer 10 can be made of any material which withstands high temperatures (90°C or more) on the one hand and which allows sufficient sealing on the other hand. Suitable materials for the spacer 10 are, for instance, Mylar® (polyester) and stainless steel.

The HTFFF channel module 20 is placed inside a temperature controlled chamber 41, as shown in Figs. 2 and 3. The solvent delivery from a solvent reservoir 34 is accomplished by means of a total of two pumps 31, 32. The first pump 31 is used for the delivery of the channel flow and injection of a sample, and the second pump 32 enables focusing of the sample before elution. A third pump 33 controls the cross-flow out of the lower channel compartment 1. All three pumps 31, 32, 33 are located outside the temperature chamber 41, and the second and third pumps 32 and 33 are directly connected via capillaries 135b, 136b to the channel module 20 inside the heated chamber 41. The outcoming flow from pump 33 is directed to a waste bottle 35 via capillary 136a and is collected therein. If necessary, the solvent from the solvent reservoir 34 is preheated by first directing capillaries 134a, 135a through the heated chamber 41, after which the solvent is delivered back to the channel flow and focus pumps 31, 32. The channel flow pump 31 is first connected to a temperature-controlled injection channel module 42 via capillary 134b. Sample injection is accomplished via a temperature controlled manual injection valve or preferably by means of a heated autosampler such as the injection channel module 42. After leaving the injection channel module 42, the flow passes through a heated transfer capillary 137 and into the heated chamber 41. The channel flow pump 31 feeds the sample to the injection port 7 of the channel module 20 (Fig. 4).

At high temperatures, it is increasingly difficult to obtain stable and noise-free baselines from connected detector units 43, 44, 45. Each detector unit 43, 44, 45 may comprise one or more single detectors. By using the technology of US Patents Nos. 6,192,764 and 6,109,119, it is possible to ensure stable baselines since no back-flushing step is-needed, and the focus-flow is introduced via a capillary 138 to an extra port 8 (see Fig. 4) preferably in the middle of the channel module 20, and is not directed through the detector unit(s) 43, 44, 45 into the channel module 20. In one embodiment, as shown in Fig. 2, detector unit 43 is also placed inside the temperature-controlled chamber 41. The exiting capillary 139a from the channel module outlet port 9 (see Fig. 4) is directly connected to the detector unit 43, which typically are IR, RI, MALS, LALS or viscometry type detectors, respectively. For a connection of an external detector 44, a heated transfer capillary 139b can be employed. The last detector in the flow path is connected to a waste reservoir 36.

The total system is controlled by computer software, which enables the use of single runs or complete run sequences. The software controls the pumps 31, 32, 33, the autosampler (injection device) 42, and the detector units 43, 44, 45. It allows the acquisition and evaluation of data, including the calculation of molar masses and radiuses. Further detectors of other manufacturers can be used with the system and are controlled by the specific software supplied for these detectors.

There are two possible configurations of the system to realize a field-flow fractionation for use at high temperatures (HTFFF). One system configuration is suitable to be connected to an existing high temperature GPC, which is a so-called "ADD ON System" (shown in Fig. 3), and the other system configuration is for a so-called "STAND ALONE" system (shown in Fig. 2).

The "STAND ALONE" system is now described in more detail with reference to Fig. 2.

In Fig. 2, the solvent bottle 34 is connected via fluid capillary 134a to the pump 31, which feeds the main channel flow (injection flow) to the high temperature injection channel module 42. The solvent bottle 34 is also connected to the second pump 32, which delivers the focus flow via capillary 138 into the focus flow inlet port 8. In general, a separation by means of an field-flow fractionation using the focus technology as disclosed in US patents Nos. 6,192,764 and 6,109,119 is subdivided into two steps, i.e. focusing and elution. The first step is to inject and focus the sample inside the channel module 20. For this purpose the pump 31 is actuated and flushes the sample out of the high temperature injection system 42 through the heated transfer capillary 137 into the high temperature FFF channel module 20, which is mounted inside the heated chamber 41. At the same time, the pump 32 starts to deliver solvent to the channel module 20, and the cross flow control pump 33 limits the out-coming cross flow of the channel module 20. The out-coming flow of the cross flow control module or pump 33 passes to the waste bottle 35. The several flow rates of the channel flow pump 31, the focus flow pump 32 and the cross flow control pump 33 are calculated by a software, so that a part of the flow exits the channel module 20 into the capillary 139a and subsequently into the detector unit 43. Thereafter, the flow passes through the heated transfer capillary 139b to the external detector unit 44, which may be provided in addition to the detector unit 43. The configuration of the detector unit 44 depends on the desired information about the sample. Different numbers and types of detectors may be used. The last detector 44 in this embodiment is connected to the waste bottle 36. After the focusing step, the elution modus starts. The pump 32 now stops, reducing the focus flow. At the same time, pump 31 increases the flow rate of the channel flow to achieve a constant flow out of the channel module 20 to the detector units 43, 44. The sample inside the heated channel module 20 elutes out of the channel module 20 and passes the detectors 43, 44. The data acquisition and the timing of the system are carried out by the cross flow control module (pump) 33, which is connected to a personal computer (not shown). After the elution of the sample, the flow rates of the pump 31 and the cross flow control pump 33 remain constant to guarantee a constant flow to the detectors 43, 44 until the software starts the next injection of a sample.

The "ADD ON" system is now described with reference to Fig. 3.

The solvent bottle 34 is connected via fluid capillary 134a to the pump 31, which delivers the main channel flow (injection flow) to the high temperature injection channel module 42, which is a part of an existing high temperature GPC channel module 46. The solvent bottle 34 is also connected to the second pump 32, which delivers the focus flow via capillary 138 into the inlet port 8 for the focus flow. Also in the "ADD ON" system, the separation by means of field-flow fractionation using the focus technology as disclosed in US Patents Nos. 6,192,764 and 6,109,119 is subdivided into two steps. The first step is to inject and focus the sample inside the channel module 20. For this purpose the pump 31 is operated and flushes the sample out of the high temperature injection system 42 through a heated transfer capillary 139 into the high temperature FFF channel module 20, which is mounted inside the heated chamber 41. At the same time, the pump 32 starts to feed solvent to the channel module 20, and the cross flow control module 33 limits the out-coming cross flow of the channel module 20. The out-coming flow of the cross flow control module 33 flows into the waste bottle 35. The several flow rates of the channel flow pump 31, the focus flow pump 32 and the cross flow control module 33 are calculated by a software, so that part of the flow exits the channel module 20 through the heated transfer capillary 139 into the detector unit 45 containing one or several detectors of the existing high temperature GPC unit 46. The configuration of the detector unit 45 depends on the desired information about the sample. Different numbers and types of detectors may be provided. The last detector in line is connected to the waste bottle 36. After the focusing step, the elution modus starts. The pump 32 now stops, reducing the focus flow. At the same time, pump 31 increases the flow rate of the channel flow to achieve a constant flow out of the channel module 20 and into the detector unit 43. The sample inside the heated channel module 20 elutes out of the channel module 20 and passes the detector unit 43. The data acquisition and the timing of the system are carried out by the cross flow control module 33, which is connected to a personal computer (not shown). After the elution of the sample, the flow rates of the pump 31 and the cross flow control 33 are kept constant to guarantee a constant flow to the detector unit 45 inside the existing high temperature GPC channel module 46 until the software starts the next injection of a sample. With a valve switching system, the user is able to choose between a GPC - and a FFF - Mode.

It is to be understood that the present disclosure is for the purpose of illustration only and the invention extends to modifications, variations and improvements thereto, within the scope of the appended claims.

## Claims

1. A membrane unit (30) for a flow field-flow fractionation apparatus, comprising a regenerable membrane (5) and a porous support (4) for the membrane (5), wherein the membrane (5) and the porous support (4) together form an integral monolithic membrane unit (30).

2. The membrane unit (30) according to claim 1, wherein the membrane (5) is heat-resistant.

3. The membrane unit (30) according to claim 2, wherein the support (4) and the membrane (5), respectively, are made of at least one material being chemically inert and having a temperature-resistance and mechanical stability sufficient for use in field-flow fractionation at temperatures of 90°C or higher.

4. A channel module (20) for a flow field-flow fractionation apparatus, comprising a membrane unit (30) as defined in any one of claims 1 to 3.

5. A flow field-flow fractionation unit, comprising a channel module (20) as defined in claim 4.

6. Use of a channel module (20) comprising a membrane unit (30) according to claim 1 with a regenerable membrane (5) and a porous support (4) for the membrane (5) for flow field-flow fractionation, wherein the membrane (5) and the porous support (4) together form an integral monolithic membrane unit (30).

7. Use according to claim 6, wherein the membrane unit (30) is heat resistant and the field-flow fractionation is carried out at temperatures of 90°C or higher.

## Patentansprüche

1. Membraneinheit (30) für eine Flussfeld-Flussfraktionierungsvorrichtung, die eine regenerierbare Membran (5) und einen porösen Träger (4) für die Membran (5) umfasst, worin die Membran (5) und der poröse Träger (4) zusammen eine integrale, monolithische Membraneinheit (30) bilden.

2. Membraneinheit (30) gemäß Anspruch 1, worin die Membran (5) hitzebeständig ist.

3. Membraneinheit (30) gemäß Anspruch 2, worin der Träger (4) und die Membran (5) jeweils aus mindestens einem Material hergestellt sind, das chemisch inert ist und eine Temperaturresistenz und eine mechanische Stabilität aufweist, die für die Verwendung in Flussfeld-Flussfraktionierung bei Temperaturen von 90°C oder höher ausreicht.

4. Kanalmodul (20) für eine Flussfeld-Flussfraktionierungsvorrichtung, die die Membran (30) gemäß irgendeinem der Ansprüche 1 bis 3 umfasst.

5. Flussfeld-Flussfraktionierungseinheit, die das Kanalmodul (20) gemäß Anspruch 4 umfasst.

6. Verwendung eines Kanalmoduls (20), das eine Membraneinheit (30) gemäß Anspruch 1 umfasst, mit einer regenerierbaren Membran (5) und einem porösen Träger (4) für die Membran (5) für die Flussfeld-Flussfraktionierung, worin die Membran (5) und der poröses Träger (4) zusammen eine integrale monolithische Membraneinheit (30) bilden.

7. Verwendung gemäß Anspruch 6, worin die Membraneinheit (30) hitzeresistent ist und die Flussfeld-Flussfraktionierung bei Temperaturen von 90°C oder höher durchgeführt wird.

## Revendications

1. Unité à membrane (30) pour un appareil de fractionnement par couplage flux-champ, comprenant une membrane régénérable (5) et un support poreux (4) pour la membrane (5), où la membrane (5) et le support poreux (4) forment ensemble une unité à membrane monolithique solidaire (30).

2. Unité à membrane (30) selon la revendication 1, dans laquelle la membrane (5) est résistante à la chaleur.

3. Unité à membrane (30) selon la revendication 2, dans laquelle le support (4) et la membrane (5), respectivement, sont réalisés au moins en un matériau qui est chimiquement inerte et ayant une résistance à la température et une stabilité mécanique suffisantes pour une utilisation dans un fractionnement par flux de champ d'écoulement à des températures de 90°C ou plus.

4. Module de canal (20) pour un appareil de fractionnement par flux de champ d'écoulement, comprenant une unité à membrane (30) telle que définie dans l'une quelconque des revendications 1 à 3.

5. Unité de fractionnement par couplage flux-champ, comprenant un module de canal (20) tel que défini dans la revendication 4.

6. Utilisation d'un module de canal (20) comprenant une unité à membrane (30) selon la revendication 1 avec une membrane régénérable (5) et un support poreux (4) pour la membrane (5) pour un fractionnement par couplage flux-champ, où la membrane (5) et le support poreux (4) forment ensemble une unité à membrane monolithique solidaire (30).

7. Utilisation selon la revendication 6, dans laquelle l'unité à membrane (30) est résistante à la chaleur et le fractionnement par champ d'écoulement est réalisé à des températures de 90°C ou plus.
